(19) Europäisches Patentamt

European Patent Office

Office européen des brevets

(11) EP 1 580 757 A2

(12) **EUROPEAN PATENT APPLICATION**

(43) Date of publication:
28.09.2005 Bulletin 2005/39

(51) Int Cl.⁷: $G11B\ 27/28$, G06F 17/30, H04N 5/14

(21) Application number: 05251372.8

(22) Date of filing: 08.03.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 24.03.2004 US 807949

(71) Applicant: Hewlett-Packard Development Company, L.P.
Texas 77070 (US)

(72) Inventor: Zhang, Tong
San Jose, California 95129 (US)

(74) Representative: Powell, Stephen David
WILLIAMS POWELL
Morley House
26-30 Holborn Viaduct
London EC1A 2BP (GB)

(54) **Extracting key-frames from a video**

(57) A method for intelligent extraction of key-frames 32 from a video 12 that yields key-frames 32 that depict meaningful content in the video 12 includes selecting a set of candidate key-frames 18 from among a series of video frames in a video 12 by performing a set of analyses on each video frame. Each analysis is selected to detect a corresponding type of meaningful content in the video 12. The candidate key-frames 18 are then arranged into a set of clusters and a key frame is then selected from each cluster in response to its relative importance in terms of depicting meaningful content in the video 12.

FIG. 2

**Description**

A video may include a series of video frames each containing a video snap-shot of an image scene. The series of video frames may be rendered on a display at an appropriate frame rate to provide a video playback.

A video system may include the capability of extracting a subset of the video frames of a video to be used as key-frames for the video. For example, a set of key-frames may be extracted from a video to construct a storyboard for the video. A storyboard may be constructed by rendering the extracted key-frames as a series of thumbnail images that provide a viewer with a visual indication of the content of the video.

One prior method for extracting key-frames from a video is based on an arrangement of shots in the video. A shot may be defined as a continuously captured sequence of video frames. For example, a professionally produced video may be arranged into a set of carefully selected shots. Key-frames for such a video may be extracted by detecting boundaries between shots and then selecting a set of key-frames for each detected shot. For example, a key-frame may be selected at the beginning, middle, and/or the end of a shot.

Unfortunately, a method for key-frame extraction that is based on shot detection may not be suitable for extracting key-frames from short video clips or from amateur videos that are not carefully arranged into shots. In addition, the key-frames selected by such a prior method may not depict highlights in the content of the video or content in the video that may be meaningful.

A method for intelligent extraction of key-frames from a video is disclosed that yields key-frames that depict meaningful content in the video. A method according to the present techniques includes selecting a set of candidate key-frames from among a series of video frames in a video by performing a set of analyses on each video frame. Each analysis is selected to detect a corresponding type of meaningful content in the video. The candidate key-frames are then arranged into a set of clusters and a key-frame is then selected from each cluster in response to its relative importance in terms of depicting meaningful content in the video.

The present techniques may be used to manage a large collection of video clips by extracting key-frames that provide a meaningful depiction of the content of the video clips. The key-frames extracted according to the present techniques may be used for video browsing and video printing.

Other features and advantages of the present invention will be apparent from the detailed description that follows.

The present invention is described with respect to particular exemplary embodiments thereof and reference is accordingly made to the drawings in which:

> **Figure 1** shows an embodiment of a method for extracting a set of key-frames from a video according to the present teachings;

> **Figure 2** shows an embodiment of a key-frame extraction system according to the present techniques;

> **Figure 3** illustrates the operations of a color histogram analyzer for an example series of video frames in a video;

> **Figure 4** shows a series of example video frames in a video that include an object;

> **Figures 5a-5c** illustrate one method for determining a relative motion among a pair of adjacent video frames;

> **Figure 6** shows a pair of adjacent video frames in a video that capture a moving object;

> **Figures 7a-7b** show a method for detecting a moving object in a video frame;

> **Figures 8a-8b** illustrate example audio events that may be used to select candidate key-frames;

> **Figure 9** shows an embodiment of a method for selecting a set of key-frames from among a set of candidate key-frames.

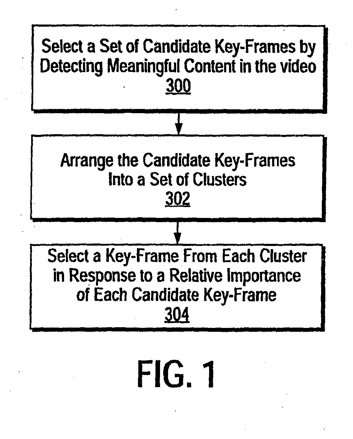

**Figure 1** shows an embodiment of a method for extracting a set of key-frames from a video according to the present teachings. At step 300, a set of candidate key-frames is selected from among a series of video frames in the video. The candidate key-frames are selected by performing a set of analyses on each video frame. Each analysis is selected to detect a meaningful content in the video. The meaningful content may be detected by analyzing camera motion in the video, object motion in the video, human face content in the video, and/or audio events in the video to name a few examples.

At step 302, the candidate key-frames from step 300 are arranged into a set of clusters. The number of clusters may be fixed or may vary in response to the complexity in the content of the video.

At step 304, one of the candidate key-frames from each cluster is selected as a key-frame for the video. The candidate key-frames may be selected in response to a relative importance of each candidate key-frame. A relative importance of a candidate key-frame may be based on an overall level of meaningful content in the candidate key-frame.

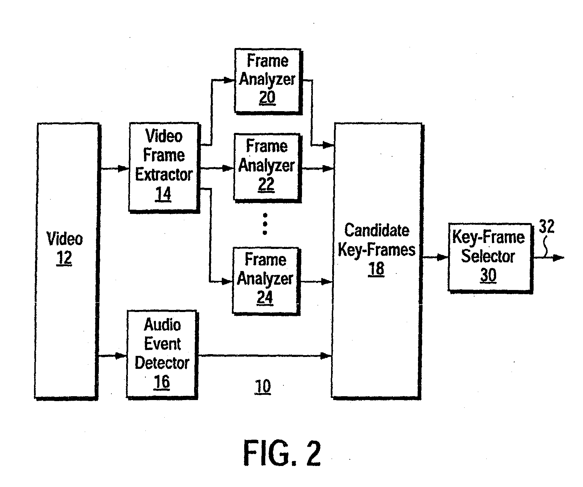

**Figure 2** shows an embodiment of a key-frame extraction system 10 according to the present techniques. The key-frame extraction system 10 extracts a set of key-frames 32 from a video 12.

The key-frame extraction system 10 includes a video frame extractor 14 that extracts each video frame of a series of video frames in the video 12 and feeds the extracted video frames to a set of frame analyzers 20-24. Each frame analyzer 20-24 performs a corresponding analysis the video frames fed from the video frame extractor 14. Each analysis is selected to detect meaningful content in the video 12. Each frame analyzer 20-24 selects candidate key-frames from the video frames of the video 12. The candidate key-frames selected by the frame analyzers 20-24 are accumulated as a set of candidate key-frames 18.

The key-frame extraction system 10 includes an audio event detector 16 that detects audio events in the video 12. The video frames of the video 12 that correspond to the detected audio events are selected for inclusion in the candidate key-frames 18.

The key-frame extraction system 10 includes a key-frame selector 30 that selects the key-frames 32 from among the candidate key-frames 18 based on the relative importance of each candidate key-frame 18. In addition, the key-frame selector 30 selects the key-frames 32 from among the candidate key-frames 18 based on the relative image quality of each candidate key-frame 18.

The frame analyzers 20-24 include a color histogram analyzer. The color histogram analyzer determines a color histogram for each video frame of the video 12. The difference in the color histograms of the video frames in the video 12 may be used to differentiate the content of the video frames. For example, the difference in the color histograms may be used to detect significant changes of the scene in the video 12. The color histogram analyzer selects a video frame in the video 12 as a candidate key-frame if a relatively large change in its color histogram in comparison to previous video frames is detected. The color histogram analyzer normalizes the color histograms for the video frames in order to minimize the influence of lighting changes in the video 12.

Initially, the color histogram analyzer selects the first video frame in the video 12 as a candidate key-frame and as a reference frame. The color histogram analyzer then compares a color histogram for the reference frame with a color histogram for each subsequent video frame in the video 12 until the difference in the color histograms is higher than a predetermined threshold. The color histogram analyzer then selects the video frame that exceeds the predetermined threshold as a candidate key-frame and as the new reference frame and then repeats the process for the remaining video frames in the video 12.

A color histogram difference may be computed as follows. A color histogram for a video frame may be computed by combining values of the Red, Green, and Blue components of each pixel in the video frame into one color code. The bit depth of the color code may be arbitrary. For example, a color code of 8 bits has a range of 0-255 and may include the four most significant bits of Green and the two most significant bits of Red and the two most significant bits of Blue. As a consequence, the value of a color histogram H(k) for the video frame equals to the total number of pixels in the video frame having a color code equal to k, where k=0~255.

Let $H_i(k)$ and $H_j(k)$ denote the histogram values for the $i^{th}$ video frame and the $j^{th}$ video frame, respectively, and k=0~255. The color histogram difference between the $i^{th}$ video frame and the $j^{th}$ video frame is calculated as follows.

$$D_1(H_i,H_j) = \frac{1}{256}\sum_{k=0}^{255}|H_i(k)-H_j(k)|$$

Alternatively, the color histogram difference between the $i^{th}$ video frame and the $j^{th}$ video frame may calculated as follows to reflect more strongly the difference.

$$D_2(H_i,H_j) = \frac{1}{256}\sum_{k=0}^{255}(H_i(k)-H_j(k))^2$$

Luminance normalization may be applied because lighting changes may cause a shift in the color histogram for two consecutive video frames. This may cause two similar video frames to exhibit relatively large color histogram differences. Luminance normalization may be performed by normalizing the sum of the luminance of all pixels in a video frame. Normalization may be performed when a relatively large color histogram difference is detected between adjacent video frames. The luminance of the subsequent video frames may be normalized according to that of the reference frame until a new reference frame is selected.

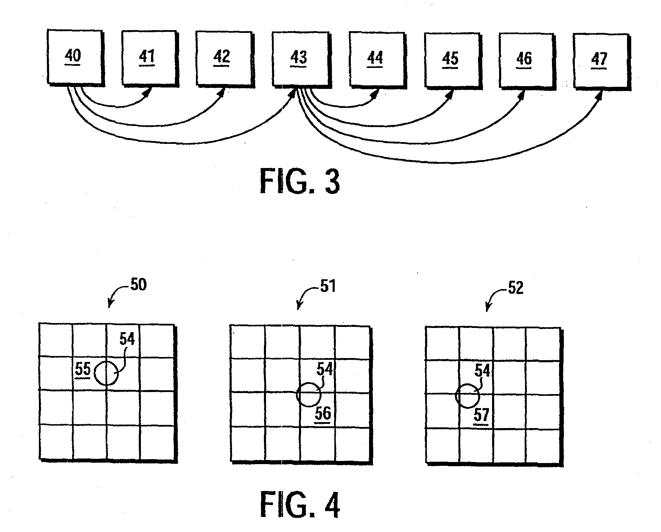

**Figure 3** illustrates the operations of a color histogram analyzer for an example series of video frames 40-47 in the video 12. The video frame 40 is the initial video frame in the video 12 and is selected by the color histogram analyzer as an initial candidate key-frame and as an initial reference frame.

The color histogram analyzer determines the color histogram for the video frame 40 and a color histogram for the video frame 41 and determines a difference in the color histograms of the video frames 40 and 41. The difference in the color histograms of the video frames 40 and 41 does not exceed the predetermined threshold. The color histogram analyzer determines a color histogram for the video frame 42 and a difference in the color histograms of the video frames 40 and 42. Again, the difference in the color histograms of the video frames 40 and 42 does not exceed the predetermined threshold. The color histogram analyzer determines a color histogram for the video frame 43 and a difference in the color histograms of the video frames 40 and 43. The difference in the color histograms of the video frames 40 and 43 exceeds the predetermined threshold so the color histogram analyzer selects the video frame 43 as another candidate key-frame and as the new reference frame for comparison to color histograms for the subsequent video frames 44-47.

In subsequent steps, the color histogram analyzer selects the video frame 47 as the next candidate key-frame. The arrows shown in Figure 3 depict the comparisons of color histograms between video frames 40-47.

The frame analyzers 20-24 include a color layout analyzer that determines a color layout for each video frame of the video 12. The color layouts in the video frames may be used to differentiate the content of the video frames. For example, differences in the color layouts of the video frames of the video 12 may be used to detect significant changes in the objects in the video 12 and to detect the movements of the objects in the video 12.

**Figure 4** shows a series of example video frames 50-52 in the video 12 that include an object 54. The object 54 changes position within each subsequent video frame 50-52. The changing position of the object 54 is indicated by changes in the color layouts for the video frames 50-52. For example, the color content of the object 54 is mostly contained in a sub-block 55 of the video frame 50 and then moves mostly to a sub-block 56 of the video frame 51 and then mostly to a sub-block 57 of the video frame 52.

The color layout analyzer selects a video frame as a candidate key-frame if a relatively large change in its color layout is detected in comparison to previous video frames in the video 12. Initially, the color layout analyzer selects the first video frame in the video 12 as a candidate key-frame and as a reference frame. The color layout analyzer then compares a color layout for the reference frame with a color layout for each subsequent video frame in the video 12 until a difference is higher than a predetermined threshold. The color layout analyzer selects a video frame having a difference in its color layout that exceeds the predetermined threshold as a new candidate key-frame and as a new reference frame and then repeats the process for the remaining video frames in the video 12.

A color layout difference may be computed by dividing a video frame into a number of sub-blocks. For example, if the width of a video frame is WIDTH and the height of the video frame is HEIGHT and the video frame is divided into NxN sub-blocks, then the width of each sub-block is WIDTH/N and the height of each sub-block is HEIGHT/N. The average color of each sub-block may then be computed by averaging the Red, Green, and Blue components, respectively, over the entire sub-block.

The color layout difference between two video frames may be computed by computing the difference of the average color of each pair of corresponding sub-blocks in the two video frames, i.e. compute an average of the absolute difference of each color component. The M sub-blocks with the greatest difference values are then selected out of the NxN sub-blocks. The average of the M difference values is computed to represent the color layout difference of the two video frames.

Alternatively, other methods for computing color layout may be employed, e.g. methods defined in the MPEG-7 standard.

The color layout and color histogram analyzers yield candidate key-frames that differ substantially in terms of color layout and/or color histogram. Candidate key-frames that differ substantially in color layout and/or color histogram enable the selection of key-frames that show different views of a scene in the video 12 while avoiding redundancy among the selected key-frames.

The frame analyzers 20-24 include a fast camera motion detector. The fast camera motion detector may detect a fast motion of the camera that captured the video 12 by detecting a relatively large difference in the color layouts or the color histograms of adjacent video frames over a number of consecutive video frames in the video 12. The video frames in the video 12 that correspond to periods of fast camera motion are not selected for the candidate key-frames 18 because fast motion tends to blur images. Instead, the fast camera motion detector selects a candidate key-frame once the fast camera motion stops and the camera stabilizes.

The frame analyzers 20-24 include a camera motion tracker. The camera motion tracker detects highlights in the content of the video 12 by tracking the motion of the camera the acquired the video 12. The camera motion tracker detects a camera motion in the video 12 by analyzing a relative motion among a series of video frames of the video 12. The camera motion tracker may determine a relative motion among the video frames in the video 12 using a block-based motion analysis such as that associated with MPEG encoding.

**Figures 5a-5a** illustrate one method that may be employed by the camera motion tracker to determine a relative motion among a pair of adjacent video frames 60-62 in the video 12. The camera motion tracker compares the pixel content of the video frames 60 and 62 and determines that a block 70 of the video frame 60 is substantially similar to a block 72 in the video frame 62. For example, the camera motion tracker may determine a correlation metric between the blocks 70 and 72 based on the pixel data values in the blocks 70 and 72 to determine the similarity. The camera motion tracker generates a motion vector 74 that indicates a spatial relationship between the blocks 70 and 72 based on the video frame 60 as a reference frame. The camera motion tracker generates a set of motion vectors for the video frames 60-62, each motion vector corresponding to a block of the reference video frame 60. The camera motion tracker examines an arrangement of the motion vectors for pairs of adjacent video frames in the video 12 to detect a motion.

The camera motion tracker may detect a panning motion by detecting an arrangement of motion vectors for adjacent video frames having magnitudes and directions that exhibit a relatively consistent direction and uniform magnitude. The camera motion tracker may detect a zooming in motion by detecting an arrangement of motion vectors for adjacent video frames that point away from the center of a video frame. The camera motion tracker may detect a zooming out motion by detecting an arrangement of motion vectors for adjacent video frames that point to the center of a video frame. The camera motion tracker may detect a period of focus by detecting an arrangement of near zero motion vectors in adjacent video frames. The camera motion tracker may detect a period of fast panning or tilting camera motion by detecting motion vectors for adjacent video frames having relatively high magnitudes and uniform directions.

The camera motion tracker selects candidate key-frames using a set of camera motion rules. One camera motion rule involves a camera focus after a period of panning or zooming motion. If the camera motion tracker detects a period of time when the camera focuses after a period of panning or zooming motion then a candidate key-frame is selected shortly after the beginning of the period of focus. It may be that the period of focus corresponds to a scene or object of interest in the video 12.

Another camera motion rule involves a panning motion after a relatively long period of focus at the beginning of the video 12. If the camera motion tracker detects a panning motion after a relatively long period of focus at the beginning of the video 12 then a candidate key-frame is selected at the beginning of the panning motion. The beginning of the panning motion may be an indication of an upcoming highlight in the video 12.

Another camera motion rule involves a fast camera motion in the video 12. If the camera motion tracker detects a fast camera motion in the video 12 then no candidate key-frames are selected during the period of fast camera motion. A period of fast camera motion may indicate content in the video 12 that was of no interest to the operator of the camera that acquired the video 12.

The frame analyzers 20-24 include an object motion analyzer. The object motion analyzer examines the trajectories of moving objects in the video 12 by comparing small-grid color layouts in the video frames. The object motion analyzer selects a candidate video frame when a new object appears or when the motion of an object changes significantly in terms of object size or object location within a video frame. The object motion analyzer preferentially selects video frames having moving objects located near the middle of the video frame.

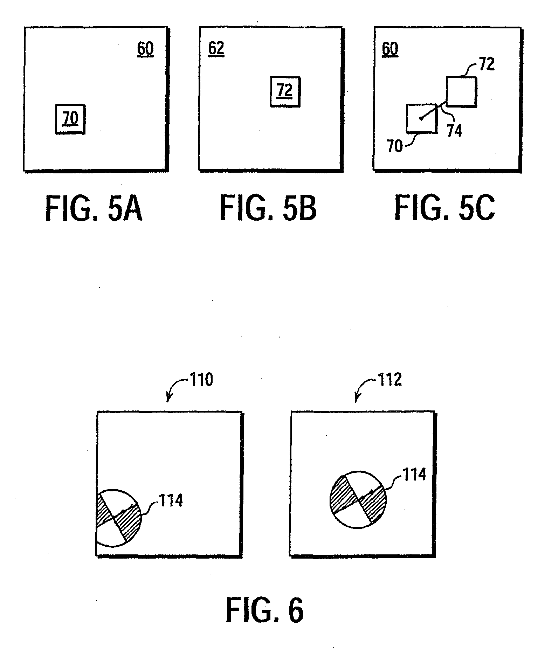

**Figure 6** shows a pair of adjacent video frames 110-112 in the video 12 that capture a moving object 114. The object motion analyzer selects the video frame 112 as a candidate video frame because the moving object 114 has substantial size within the video frame 112 and is positioned near the center of the video frame 112.
The object motion analyzer detects the moving object 114 based on a set of observations pertaining to moving objects. One observation is that the foreground motion in the video 12 differs substantially from the background motion in the video 12. Another observation is that the photographer that captured the video 12 was interested in capturing moving objects of moderate size or larger and was interested in keeping a moving object of interest near the center of a camera viewfinder. Another observation is that the camera operator was likely interested in one dominant moving object at a time.

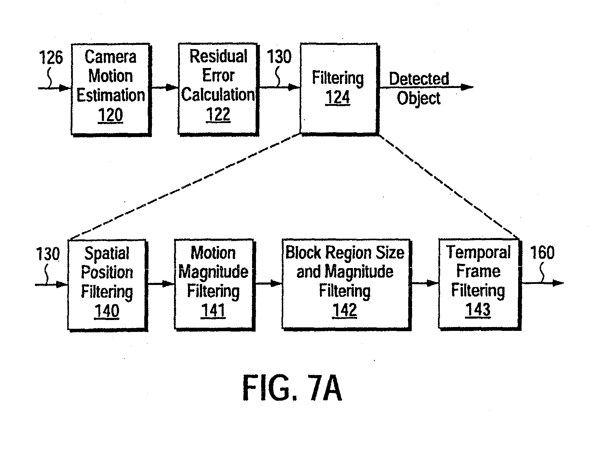

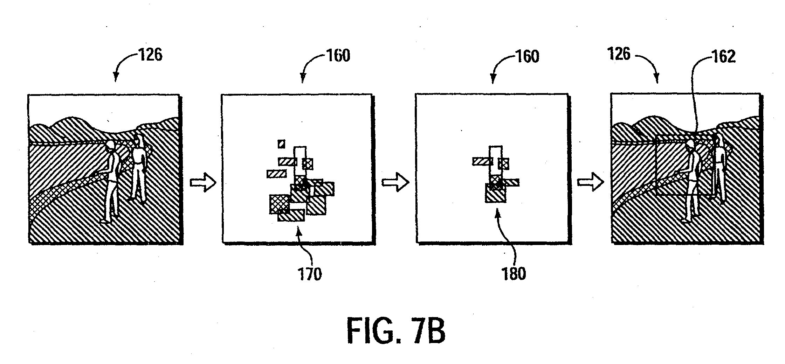

**Figures 7a-7b** show a method performed by the object motion analyzer to detect a moving object in a video frame 126 of the video 12. The object motion analyzer first performs a camera motion estimation 120 on the video frame 126. The object motion analyzer then generates a residual image 130 by performing a residual error calculation in response to the camera motion estimate for the video frame 126. The object motion analyzer then applies a filtering 124 to the residual image 130. The filtering 124 includes a series of filters 140-143. Figure 7b shows a filtered residual image 160 derived from the residual image 130.

The object motion analyzer then clusters a set of blocks 170 in the filtered residual image 160 based on the connectivity of the blocks 170. The object motion analyzer maintains a cluster of blocks 180 which is the biggest cluster near the middle of the video frame 126 while removing the remaining of the blocks 170 as shown in Figure 7b. The object motion analyzer then determines a box 162 for the blocks 180 that depicts the position of the detected moving object in the video frame 126 as shown in **Figure 7b.**

Once the moving object in the box 162 is detected, the object motion analyzer tracks it through the video frames of the video 12 that follow the video frame 126. The object motion analyzer may track an object using any of a variety of known methods for tracking object motion in successive video frames.

The frame analyzers 20-24 include a human face detector. The human face detector selects candidate key-frames which contain human faces from among the video frames of the video 12 because it may be assumed that the video frames that contain human faces are more likely to be of interest to a viewer of the video 12 than the video frames that do not include a human faces. The human face detector also records the size and frame positions of any human faces that are detected. The human face detector may employ any know method for human face detection including methods based on pattern matching, e.g. matching an arrangement of human facial features.

The audio event detector 16 detects audio events in the sound track of the video 12 that may indicate a highlight. Examples of audio events include, applause, screaming, acclaim, the start of high level noise after a period of silence. The audio event detector 16 selects the video frames in the video 12 that correspond to the start of an audio event for inclusion in the candidate key-frames 18. The audio event detector 16 may employ statistical models of the audio energy for a set of predetermined audio events and then match the audio energy in each video frame of the video 12 to the statistical models.

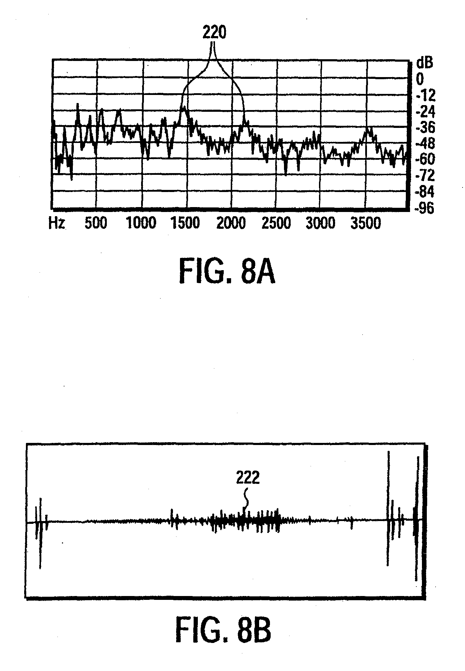

**Figure 8a is** an audio spectrum for an example audio event 220. The example audio event 220 is the sound of screaming which is characterized by a relatively high-level rapidly changing pitch. The audio event detector 16 searches the sound track of the video 12 for screaming pitch, i.e. fundamental frequency, and partials, i.e. integer multiples of the fundamental frequency, in the frequency domain of the audio signal and a candidate key-frame is selected at the point of screaming.

**Figure 8b** is an audio signal waveform of an example audio event 222 that is a period of noise or speech after a relatively long period of silence. The audio event detector 16 tracks the energy level of the audio signal and selects a candidate key-frame at a point 222 which corresponds to the start of a period of noise or speech after a relatively long period of silence.

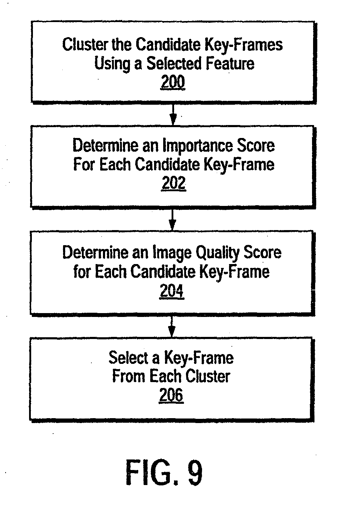

**Figure 9** shows an embodiment of a method employed by the key-frame selector 30 to select the key-frames 32 from among the candidate key-frames 18. At step 200, the key-frame selector 30 clusters the candidate key-frames 18 on the basis of a feature of each candidate key-frame 18. In one embodiment, the key-frame selector 30 clusters the candidate key-frames 18 in response to the color histogram of each candidate key-frame 18. In other embodiments, other features of the candidate key-frames 18 may be used as the basis for clustering at step 200.

The key-frame selector 30 may cluster the candidate key-frames 18 into a fixed number N of clusters at step 200. For example, in an embodiment in which 4 key-frames are to be selected, the key-frame selector 30 clusters the candidate key-frames 18 into 4 clusters. The number of key-frames may be limited to that which is suitable for a particular use, e.g. video postcard, video storybook, LCD display on cameras or printers, etc. Initially, the key-frame selector 30 randomly assigns N of the candidate key-frames 18 to respective clusters 1-N. the color histograms of these candidate key-frames provide an initial centroid for each cluster 1-N. The key-frame selector 30 then iteratively compares the color histograms of the remaining candidate key-frames 18 to the centroids for the clusters 1-N and assigns the candidate key-frames 18 to the clusters 1-N based on the closest matches to the centroids and updates the centroids for the clusters 1-N accordingly.

The key-frame selector 30 may cluster the candidate key-frames 18 into a variable number n of clusters at step 200. The value of n may vary according to the complexity of the content of the video 12. For example, the key-frame selector 30 may employ a greater number of clusters in response to more diversity in the content of the video 12. This may be used to yield more key-frames 32 for use in, for example, browsing a video collection. Initially, the key-frame selector 30 assigns a first of the candidate key-frames 18 to cluster 1 and uses its color histogram as a centroid of the cluster 1. The key-frame selector 30 then compares a color histogram for a second of the candidate key-frames 18 to the centroid of cluster 1. If a difference from the centroid of the cluster 1 is below a predetermined threshold then the second of the candidate key-frames is assigned to cluster 1 and the centroid for the cluster 1 is updated with the color histogram of the second of the candidate key-frame 18. If the color histogram of the second of the candidate key-frames 18 differs from the centroid of the cluster 1 by an amount that exceeds the predetermined threshold then the second of the candidate key-frames is assigned to cluster 2 and its color histogram functions as the centroid for the cluster 2. This process repeats for the remainder of the candidate key-frames 18.

At step 202, the key-frame selector 30 determines an importance score for each of the candidate key-frames 18. The importance score of a candidate key-frame is based on a set of characteristics of the candidate key-frame.

One characteristic used to determine an importance score for a candidate key-frame is whether the candidate key-frame satisfies one of the camera motion rules of the camera motion tracker. If a candidate key-frame satisfies one of the camera motion rules then the key-frame selector 30 credits the candidate key-frame with one importance point.

Another characteristic used to determine an importance score for a candidate key-frame is based on any human faces that may be contained in the candidate key-frame. Factors pertinent to this characteristic include the number of human faces in the candidate key-frame, the size of the human faces in the candidate key-frame, and the position of the human faces within the candidate key-frame. The key-frame selector 30 counts the number of human faces (F) that are contained in a predetermined area range, e.g. a center area, of a candidate key-frame and that are larger than a predetermined size and credits the candidate key-frame with F importance points.

Another characteristic used to determine an importance score for a candidate key-frame is based on moving objects in the candidate key-frame. The key-frame selector 30 credits a candidate key-frame with M importance points if the candidate key-frame includes a moving object having a size that is within a predetermined size range. The number M is determined by the position of the moving object in the candidate key-frame in relation to the middle of the frame. The number M equals 3 if the moving object is in a predefined middle area range of the candidate key-frame. The number M equals 2 if the moving object is in a predefined second-level area range of the candidate key-frame. The number M equals 1 if the moving object is in a predefined third-level area range of the candidate key-frame.

Another characteristic used to determine an importance score for a candidate key-frame is based on audio events associated with the candidate key-frame. If a candidate key-frame is associated with an audio event detected by the audio event detector 16 then the key-frame selector 30 credits the candidate key-frame with one importance point.

The key-frame selector 30 determines an importance score for each candidate key-frame 18 by tallying the corresponding importance points.

At step 204, the key-frame selector 30 determines an image quality score for each of the candidate key-frames 18. The image quality score for a candidate key-frame may be based on the sharpness of the candidate key-frame or on the brightness of the candidate key-frame or a combination of sharpness and brightness. The key-frame selector 30 may perform known methods for determining the sharpness and the brightness of a video frame when determining an image quality score for each candidate key-frame 18.

At step 206, the key-frame selector 30 selects the key-frames 32 by selecting one candidate key-frame from each cluster of the candidate key-frames 18. The key-frame selector 30 selects the candidate key-frame in a cluster having the highest importance score and having an image quality score that exceeds a predetermined threshold. For example, the key-frame selector 30 initially selects the candidate key-frame in a cluster having the highest importance score and if its image quality score is below the predetermined threshold then the key-frame selector 30 selects the candidate key-frame in the cluster having the next highest importance score, etc. until the image quality score threshold is satisfied. If more than one candidate key-frame has the highest importance score then the one that is closest to the centroid of the cluster is selected.

The key-frame extraction system 10 may enable semi-automatic user selection of key-frames for the video 12. For example, the key-frames 32 may be used as an initial set. On the basis of the initial set a user may choose to browse the previous frames and the subsequent frames to each key-frame in the initial set in order to find the exact frame that is to be printed or emailed to friends, etc. In another example, the key-frame selector 30 may select X candidate key-frames for each cluster, e.g. the X candidate key-frames the highest importance scores. The key-frame extraction system 10 may include a display and a user interface mechanism. The X candidate key-frames for each cluster may be rendered on the display and a user may select the most appealing of the candidate key-frames via the user interface mechanism.

The present techniques may be used to manage collections of video clips, e.g. collections of short video clips acquired with a digital camera, as well as unedited long shots in video recordings acquired with camcorders. The key-frames extracted from video clips may be used for video printing and/or video browsing and video communication, e.g. through email, cell phone display, etc. The above methods for key-frame extraction yield key-frames that may indicate highlights in a video clip and depict content in a video clip that may be meaningful to a viewer. The multiple types of content analysis performed by the frame analyzers 20-24 enable extraction of key-frames that provide a comprehensive representation of the content of video clips. The extracted key-frames may be used for thumbnail representations of video clips, for previewing video clips, as well as categorizing and retrieving video data. Extracted key-frames may be used for printing storybooks, postcards, etc.

The foregoing detailed description of the present invention is provided for the purposes of illustration and is not intended to be exhaustive or to limit the invention to the precise embodiment disclosed. Accordingly, the scope of the present invention is defined by the appended claims.

**Claims**

1. A method for extracting a set of key-frames (32) from a video (12), comprising the steps of:

   selecting a set of candidate key-frames (18) from among a series of video frames in the video (12) by performing a set of analyses on each video, frame, each analysis selected to detect a meaningful content in the video (12);
   arranging the candidate key-frames (18) into a set of clusters;
   selecting one of the candidate key-frames (18) from each cluster in response to a relative importance of each candidate key-frame:

2. The method of claim 1, wherein the step of selecting a set of candidate key-frames (18) includes the step of selecting a set of candidate key-frames (18) in response to a camera motion in the video (12).

3. The method of claim 1, wherein the step of selecting a set of candidate key-frames (18) includes the step of selecting a set of candidate key-frames (18) in response to an object motion in the video (12).

4. The method of claim 1, wherein the step of selecting a set of candidate key-frames (18) includes the step of selecting a set of candidate key-frames (18) in response to a fast camera movement in the video (12).

5. The method of claim 1, wherein the step of selecting a set of candidate key-frames (18) includes the step of selecting a set of candidate key-frames (18) in response to a human face content in the video (12) .

6. The method of claim 1, further comprising the step of selecting a set of candidate key-frames (18) in response to an audio event in the video (12).

7. A key-frame extraction system, Comprising:

a set of frame analyzers (20-24) that each select a set of candidate key-frames (18) from among a series of video frames in a video (12), each frame analyzer (20-24) for detecting a meaningful content in the video (12);
key-frame selector (30) that arranges the candidate key-frames (18) into a set of clusters and that selects one of the candidate key-frames (18) from each cluster as a key-frame for the video (12) in response to a relative importance of each Candidate key-frame.

8. The key-frame extraction system of claim 7, further comprising an audio event detector that selects a set of candidate key-frames (18) by detecting a set of audio events in the video (12).

9. The key-frame extraction system of claim 7, wherein the frame analyzers (20-24) include a color histogram analyzer.

10. The key-frame extraction system of claim 7, wherein the frame analyzers (20-24) include a color layout analyzer.

Select a Set of Candidate Key-Frames by
Detecting Meaningful Content in the video
300

Arrange the Candidate Key-Frames
Into a Set of Clusters
302

Select a Key-Frame From Each Cluster
in Response to a Relative Importance
of Each Candidate Key-Frame
304

# FIG. 1

FIG. 2

| 40 | 41 | 42 | 43 | 44 | 45 | 46 | 47 |

**FIG. 3**

50

51

52

55 54

54
56

54
57

**FIG. 4**

FIG. 5A  FIG. 5B  FIG. 5C

FIG. 6

126 → | Camera Motion Estimation **120** | → | Residual Error Calculation **122** | → 130 → | Filtering **124** | → Detected Object

130 → | Spatial Position Filtering **140** | → | Motion Magnitude Filtering **141** | → | Block Region Size and Magnitude Filtering **142** | → | Temporal Frame Filtering **143** | → 160

# FIG. 7A

FIG. 7B

FIG. 8A

FIG. 8B

Cluster the Candidate Key-Frames
Using a Selected Feature
200

Determine an Importance Score
For Each Candidate Key-Frame
202

Determine an Image Quality Score
for Each Candidate Key-Frame
204

Select a Key-Frame
From Each Cluster
206

FIG. 9